(19) Europäisches Patentamt

European Patent Office

Office européen des brevets

(11) Publication number : **0 365 498 B1**

# (12) EUROPEAN PATENT SPECIFICATION

(45) Date of publication of patent specification :
**05.05.93 Bulletin 93/18**

(51) Int. Cl.⁵ : **H01F 1/28**

(21) Application number : **89850303.2**

(22) Date of filing : **15.09.89**

(54) **Electrically conductive fluids.**

(30) Priority : **18.10.88 SE 8803712**

(43) Date of publication of application :
**25.04.90 Bulletin 90/17**

(45) Publication of the grant of the patent :
**05.05.93 Bulletin 93/18**

(84) Designated Contracting States :
**DE ES FR GB IT**

(56) References cited :
**EP-A- 250 236
DE-A- 3 709 852
US-A- 3 700 595
US-A- 3 764 540
US-A- 3 843 540**

(56) References cited :
**US-A- 3 917 538
US-A- 4 208 294
US-A- 4 285 801
US-A- 4 315 827
US-A- 4 333 988
US-A- 4 701 276
US-A- 4 741 850**

(73) Proprietor : **SKF Nova AB
S-415 50 Göteborg (SE)**

(72) Inventor : **Lindsten, Göran
Torsgatan 25
S-43138 Mölndal (SE)**

(74) Representative : **Forsberg, Lars-Ake et al
SKF NOVA AB Patent Department
S-415 50 Göteborg (SE)**

EP 0 365 498 B1

EP 0 365 498 B1

## Description

The present invention refers to electrically conductive magnetic fluids having super-paramagnetic properties.

Super-paramagnetic fluids are earlier known. They usually contain finely divided magnetic particles dispersed in oil by means of one or more dispergents. The oil or the carrier fluid may be of different types, like the dispergent for the magnetic particles. The fluid hwever usually consists of colloidal oils.

Super-paramagnetic fluids by means of a magnetic field can be introduced and retained in spaces without a container. This unique property has resulted in their use as fluid seals of very low torque resistance, which do not generate particles during dynamic operation such as conventional lip seals may do. Fluid seals using super-paramagnetic fluids have found big use as exclusion seals in disc devices for computers and as pressure seals in devices having a plurality of fluid seals or stages. Super-paramagnetic fluids are also used as heat transferring fluids between voice coils and magnets in loud speakers. Some supermagnetic fluids and their compositions are described in US-A-3,700,595, US-A-3,764,540, US-A-3,843,540, US-A-3,917,538, US-A-4,208,294, US-A-4,285,801, US-A-4,315,827, US-A-4,333,988 and US-A-4,701,276.

The abovementioned magnetic fluids are not generally electrically conductive. Sometimes it however may he desirable that the fluids has a certain conductivity. This is the case particularly when the magnetic fluid is used as seal. In many such cases it is desirable that static electricity can be led away.

DE-A-3709852 discloses a fluid comprising electrically conductive additives to magnetic liquids where the electrical conductivity depends on metal particles or metal-coated particles of various composition. EP-A-250236 discloses an electrically conductive magnetic liquid wherein an excess of dispersant dissolved by the carrier liquid yields the electrical conductivity.

In order to provide for such a removal of static electricity it has e.g. been provided a knob sliding against the rotating shaft or the magnetic fluid has been made electrically conductive by means of addition of carbon particles in form of graphite or by addition of an excess of a cationic dispergent. The two latter cases are described in European patent applications 208391 and 206516.

The drawback in using electrically conductive knobs is evident. The knobs cause friction, noise and wear. Such knobs also result in that there will be more parts to assemble which will result in a more complex and expensive seal.

An additive of graphite in the magnetic colloid may give the desired electrical conductivity, but it simultaneously increases the viscosity and influences the physical properties of the colloid in other respects.

An excess of dispergent also results in an increase of the viscosity. It simultaneously reduces the surface tension and may, if it is sour, result in corrosion on material surrounding the colliod.

By the present invention has been solved the problems asocciated with the known magnetic fluids and electrically non-conductive fluids otherwise, which incorporate sliding knobs, graphite or dispergent in excess and it has been provided a fluid without the above mentioned drawbacks and in which the electric conductivity may be altered within wide ranges.

The electrically conductive magnetic fluid according to the invention contains magnetic particles dispersed by aid of a dispergent in a carrier fluid and it is characterized in that it also contains an electrolyte, which is kept in solution by means of one or more complex forming substances, so called ligands.

By varying the concentration and composition of the complex and the relation between other components present therein it is possible to obtain a desired electrical conductivity.

Different types of electrolytes may be used, but according to the invention it is appropriate to use salts with cations from alkali metals such as $Li^+$, $Na^+$, $K^+$, $Rb^+$, $Cs^+$ or ammonium $NH_4^+$ and with anions such as $Cl^-$, $J^-$, $Br^-$, $PF_6^-$, picrate$^-$, $SCN^-$, $BF_4^-$, tetraphenylborate$^-$, toluol-4-sulphonate$^-$.

In certain cases it may also may be possible to use salts from alkalic earth metals.

The ligand to be used according to the invention acts in that it complex binds to the positive ion and it should, beside by the property of being able to complex bind to a positive ion, be soluble in the carrier fluid.

The ligand should also be non-ionic.

Suitable ligands, which could be used according to the invention, incorporate
crown ethers,
polyethylene glycol dialkyl ethers,
polyethylene glycol fatty acid esters,
bis (polyethylene glycol) esters from di-acids.

Anyone of the known super-paramagnetic collids and otherwise electrically non-conductive fluids, can be made electrically conductive with aid of the additives prescribed by the invention.

Suiable colloids, which primarily have been used, are such as described in Swedish patent application No

2

8800394-2. This patent application describes super-paramagnetic fluids containing a carrier fluid, which is a

ester,

ether,

ketone,

poly(alfaolefine)oil, or a mineral oil,

alkanacidtriester from trimethylolpropane,

mixed alkyltrimellitate-triester,

a dialkylsebacate or an alkyloleate.

The dispergent used in the colloids according to said patent application is an agent having the formula A-X-B, whereby A originates from a non-ionic surface active substance consisting of ethoxylated or propoxylated alcohols, ethoxylated or propoxylated alkylphenols, ethoxylated or propoxylated amides, ethoxylated or propoxylated amines and block polymers of ethylene oxide/propylene oxide, B is an organic carboxyl group, which binds said dispergent to the magnetic particles and X is a combining group, which combines A and B, whereby X incorporates at least one carbon atom.

The magnetic materials, which can be used in accordance with the invention, are known materials having a particle size from about 20 Ångström to about 400 Ångström in diameter. The most common materials are ferrits, such as magnetite ($Fe_3O_4$), zinc ferrite and manganese ferrite, metals such as iron, nickel or kobalt and chromium dioxide.

Embodiments

A number of electrically conductive magnetic colloids were prepared and the conductivity was measured at a temperature of 25 °C in a measuring instrument named YEW, Conductivity Meter, Model SC 51 or the resistance was measured in an especial measuring cell with an instrument named Philips PM 2518 and the conductivity on basis of the measured resistance values. The conductivity was expressed in Siemens/cm = (Ohm x cm)$^{-1}$. As electrolyte was used potassiumhexafluorophosphate in different amounts and as ligand was used a polyethyleneglycol-fatty acid ester having the trade name Mapeg 400 DL or Mapeg 400 DO in different amounts.

The electrolyte was first added to the ligand under stirring and was dissolved therein whereupon the ligand solution was added to the magnetic colloid. Due to the altered composition of the colloid some of the magnetic particles agglomerate and the resulting mixture therefor was refined over a strong magnet for 24 hours and thereupon was filtered without the magnet being removed.

The attached table defines the composition of the electrically conductive magnetic colloids and the conductivity measured for each mixture.

The invention is not limited to the embodiments shown, but may be varied in different manners within the scope of the claims.

Table 1

| Basic oil | | Electrolyte | Ligand | Conductivity | Saturation magnetization |
|---|---|---|---|---|---|
| 1. Magnetic colloid * (20 ml) | | $KPF_6$ (0,2g) | Polyethylenglycol fatty acid ester (3 ml) | 4nS/cm | 13,5 kA/m |
| 2. Magnetic colloid (15 ml) | | $KPF_6$ (0,08g) | Polyethylenglycol fatty acid ester (0,8 ml) | 3nS/cm | 16,2 kA/m |
| 3. Magnetic colloid (14 ml) | | $KPF_6$ (0,16g) | Polyethylenglycol fatty acid ester (1,6 ml) | 5nS/cm | 14,2 kA/m |
| 4. Magnetic colloid (5 ml) | | $KPF_6$ (0,05g) | Polyethylenglycol fatty acid ester (0,5 ml) | 5nS/cm | 25,2 kA/m |
| 5. Magnetic colloid (5 ml) | | $KPF_6$ (0,1g) | Polyethylenglycol fatty acid ester (1,0 ml) | 6nS/cm | 24,1 kA/m |

* This magnetic collid was based on a triesteroil and the resulting mixture (collid, salt and ligand) had a saturation magnetization of 13,5 kA/m, expressed in Si-units.

The conductivity has been expressed in nanosiemens per centimeter, nS/cm.

## Claims

1. An electrically conductive fluid comprising magnetic particles dispersed with a dispersant in a carrier fluid other than water,
**characterized**
in that the electrically conductive fluid also contains an electrolyte held in solution by a ligand which is soluble in said carrier fluid, said electrolyte having a cation selected from the group consisting of lithium, sodium, potassium, rubidium, cesium and ammonium and an anion selected from the group consisting of chlorine, fluorine, bromine, hexafluorophosphate, picrate, thiocyanate, tetrofluoroborate, tetraphenolborate and toluol-4-sulphonate.

2. A fluid according to claim 1, wherein the ligand is non-ionic.

3. A fluid according to claim 1, wherein the ligand is selected from the group of crown ethers, polyethylene glycol diakyl ethers, and bis (polyethylene-glycol) esters of diacids.

4. A fluid according to any of claims 1 - 3, wherein the carrier fluid is selected from the group consisting of esters, ethers, ketones, poly(alpha olefin) oil and mineral oil.

5. A fluid according to any of claims 1 - 3, wherein the carrier fluid is selected from the group consisting of alkanoic triesters of trimethylol,propane, alkyltrimelliatetriesters, dialkyl sebacates, and alkyl oleats.

6. A fluid according to any of the preceding claims,, wherein the dispersant is an agent having the formula A-X-B, whereby A is a non-ionic surface active substance selected from the group consisting of ethoxylated or propoxylated alcohols, ethoxylated or propoxylated alkylphenols, ethoxylated or propoxylated amides, ethoxylated or propoxylated amines and block polymers of ethylene oxide/propylene oxide, B is an organic carboxyl group which binds said dispersant to the magnetic particles and X is a linking group covalently bonded to A and B and having at least one carbon atom.


## Patentansprüche

1. Elektrisch leitende Flüssigkeit, enthaltend magnetische Teilchen, die mit einem Dispergiermittel in einer Trägerflüssigkeit, welche nicht Wasser ist, dispergiert sind, **dadurch gekennzeichnet**, daß die elektrisch leitende Flüssigkeit auch einen Elektrolyten enthält, der durch einen Liganden in Lösung gehalten ist, welcher in der Trägerflüssigkeit lösbar ist, wobei der Elektrolyt ein Kation hat, das aus der Gruppe, bestehend aus Lithium, Natrium, Kalium, Rubidium, Cäsium und Ammonium ausgewählt ist, sowie ein Anion, welches aus der Gruppe, bestehend aus Chlor, Fluor, Brom, Hexafluorphosphat, Picrat, Thiocyanat, Tetrafluorborat, Tetraphenolborat und Toluol-4-sulfonat, ausgewählt ist.

2. Flüssigkeit nach Anspruch 1, **dadurch gekennzeichnet**, daß der Ligand nicht-ionisch ist.

3. Flüssigkeit nach Anspruch 1, **dadurch gekennzeichnet**, daß der Ligand ausgewählt ist aus der Gruppe, bestehend aus Kronenethern, Polyethylen-glykol-dialkyl-ethern und Bis-(polyethylen-glykol)-estern von zweibasischen Säuren.

4. Flüssigkeit nach einem der Ansprüche 1 bis 3, **dadurch gekennzeichnet**, daß die Trägerflüssigkeit ausgewählt ist aus der Gruppe, bestehend aus Estern, Ethern, betonen, Poly-($\alpha$-olefin)-öl und Mineralöl.

5. Flüssigkeit nach einem der Ansprüche 1 bis 3, **dadurch gekennzeichnet**, daß die Trägerflüssigkeit ausgewählt ist aus der Gruppe, bestehend aus Alkansäuretriestern von Trimethylol-propan, Alkyltrimellitat-triestern, Dialkylsebacat und Alkyl-oleat.

6. Flüssigkeit nach einem der vorhergehenden Ansprüche, **dadurch gekennzeichnet**, daß das Dispergiermittel ein Mittel der Formel A-X-B ist, worin A eine nicht-ionische, oberflächenaktive Substanz ist, welche ausgewählt ist aus der Gruppe, bestehend aus ethoxylierten oder propoxylierten Alkoholen, ethoxylierten oder propoxylierten Alkylphenolen, ethoxylierten oder propoxylierten Amiden, ethoxylierten oder propoxylierten Aminen und Blockpolymeren von Ethylenoxid/Propylenoxid, B eine organische Carboxylgruppe ist, welche das Dispergiermittel mit den magnetischen Teilchen verbindet, und X eine Verbindungsgruppe ist, die covalent mit A und mit B verbunden ist und wenigstens ein Kohlenstoffatom hat.

## Revendications

1. Liquide électriquement conducteur, comprenant des particules magnétiques dispersées, à l'aide d'un dispersant, dans un liquide porteur autre que l'eau, caractérisé en ce que le liquide électriquement conducteur contient également un électrolyte maintenu en solution par un ligand qui est soluble dans ledit liquide porteur, ledit électrolyte ayant un cation choisi parmi les cations lithium, sodium, potassium, rubidium, césium et ammonium, et un anion choisi parmi les anions chlorure, fluorure, bromure, hexafluorophosphate, picrate, thiocyanate, tétrafluoroborate, tétraphénylborate et toluène-4-sulfonate.

2. Liquide selon la revendication 1, dans lequel le ligand est non ionique.

3. Liquide selon la revendication 1, dans lequel le ligand est choisi parmi les éthers-couronne, les éthers dialkyliques de polyéthylèneglycol et les esters de bis(polyéthylèneglycol) de diacides.

4. Liquide selon l'une quelconque des revendications 1 à 3, dans lequel le liquide porteur est choisi parmi les esters, les éthers, les cétones, les huiles de poly(alpha-oléfine) et les huiles minérales.

5. Liquide selon l'une quelconque des revendications 1 à 3, dans lequel le liquide porteur est choisi parmi les triesters d'acide alcanoïque du triméthylolpropane, les triesters d'alkyle de l'acide trimellitique, les sébaçates de dialkyle et les oléates d'alkyle.

6. Liquide selon l'une quelconque des revendications précédentes, dans lequel le dispersant est un agent répondant à la formule A-X-B, dans laquelle A représente une substance tensio-active non-ionique, choisie parmi les alcools éthoxylés ou propoxylés, les alkylphénols éthoxylés ou propoxylés, les amides éthoxylés ou propoxylés, les amines éthoxylées ou propoxylées et les copolymères séquencés d'oxyde d'éthylène et d'oxyde de propylène, B représente un groupe carboxylique organique qui lie ledit dispersant aux particules magnétiques, et X représente un groupe de liaison , lié de manière ovalente à A et à B et comportant au moins un atome de carbone.